# EUROPÄISCHE PATENTSCHRIFT

(11) **EP 2 409 052 B1**
(45) Veröffentlichungstag und Bekanntmachung des Hinweises auf die Patenterteilung: **17.12.2014**
(21) Anmeldenummer: 10704538.7
(22) Anmeldetag: 10.02.2010
(51) Int. Cl.: F16H 3/089, F16H 3/14

(54) **SCHALTGETRIEBE**
TRANSMISSION
BOÎTE DE VITESSES

(30) Priorität: 16.03.2009 DE 102009001579
(43) Veröffentlichungstag der Anmeldung: 25.01.2012
(73) Patentinhaber: ZF Friedrichshafen AG, 88038 Friedrichshafen (DE)
(72) Erfinder: LAMKE, Martin, 88213 Ravensburg (DE); BÖRNER, Jörg, 88048 Friedrichshafen (DE); LANZ, Hermann, 88699 Frickingen (DE); LUDESCHER, Michael, 88048 Friedrichshafen (DE); BAYER, Ewgeni, 78333 Stockach (DE)
(86) Internationale Anmeldenummer: PCT/EP2010/051609
(87) Internationale Veröffentlichungsnummer: WO 2010/105877

(56) Entgegenhaltungen:
- DE-A1- 2 355 125
- DE-A1- 10 151 752
- DE-B1- 2 615 739
- US-A- 2 430 169
- US-A- 4 735 104

## Beschreibung

Die Erfindung betrifft ein Schaltgetriebe mit einer Eingangswelle, deren Drehzahl und deren Drehmoment auf eine Ausgangswelle durch Wahl eines von mehreren, schaltbaren Zahnradpaaren übersetzt übertragbar ist, welche durch an- und abtriebsseitig jeweils auf gemeinsamen Anordnungsachsen platzierte Zahnräder gebildet sind, wobei diese Anordnungsachsen unter einem Winkel zueinander positioniert liegen und die Zahnradpaare hierzu jeweils mindestens ein kegelförmig ausgeführtes Zahnrad aufweisen, und wobei eine Drehrichtungsumkehr der Ausgangswelle über ein abseits der Anordnungsachsen liegendes und mit einem antriebs- und einem abtriebsseitig platzierten Gegenrad in Eingriff stehendes Zwischenrad durch Betätigen einer Kupplungseinrichtung einleitbar ist, wobei zumindest eines der Gegenräder kegelförmig ausgeführt ist.

Schaltgetriebe kommen unter anderem bei Kraftfahrzeugen und Schiffen zum Einsatz, um eine durch eine Brennkraftmaschine zur Verfügung gestellte Drehzahl und ein Drehmoment entsprechend der Wahl eines von mehreren, schaltbaren Zahnradpaaren des Schaltgetriebes übersetzt für den Vortrieb des Kraftfahrzeuges bzw. des Schiffes zu nutzen. Hierbei gibt es Schaltgetriebeentwicklungen, bei welchen die Anordnungsachsen, auf welchen jeweils die an- und abtriebsseitigen Zahnräder der schaltbaren Zahnradpaare liegen, unter einem Winkel relativ zueinander positioniert sind. Dadurch kann die Lage dieser Anordnungsachsen besser an die vorherrschenden Bauraumbedingungen des Schaltgetriebes angepasst und des Weiteren ein variabler Achsabstand dargestellt werden, wodurch die einzelnen, schaltbaren Zahnradpaare optimal gestaltet werden können. Dies resultiert insgesamt entweder in einer Reduzierung der Baugröße des Schaltgetriebes oder in einer Erhöhung der Spreizung.

Aus der DE 101 51 752 A1 ist ein derartiges Schaltgetriebe bekannt, bei welchem eine Drehzahl und ein Drehmoment einer Eingangswelle durch Wahl eines von mehreren, schaltbaren Zahnradpaaren übersetzt auf eine Ausgangswelle übertragen werden kann. Diese Zahnradpaare werden hierbei durch an- und abtriebsseitig jeweils auf gemeinsamen Anordnungsachsen platzierte Zahnräder gebildet, wobei die abtriebsseitige Anordnungsachse der Rotationsachse der Ausgangswelle entspricht, während die antriebsseitige Anordnungsachse durch eine, mit der Eingangswelle über eine feste Zahnradstufe verbundene Vorgelegewelle definiert wird. Um nun einen variablen Achsabstand realisieren zu können, sind die beiden Anordnungsachsen und damit die Vorgelegewelle und die Ausgangswelle unter einem Winkel zueinander positioniert. Zudem weist jedes schaltbare Zahnradpaar ein kegelförmig ausgeführtes Zahnrad auf, um trotz der Winkelstellung einen Zahneingriff mit dem gegenüberliegenden, zylinderförmigen Zahnrad zu ermöglichen. Des Weiteren ist abseits der beiden Anordnungsachsen eine Zwischenwelle mit einem Zwischenrad vorgesehen, welches zum einen mit einem antriebsseitig auf der Vorgelegewelle zum anderen mit einem abtriebsseitig auf der Ausgangswelle platzierten Gegenrad in Eingriff steht und bei Betätigen einer auf der Ausgangswelle vorgesehenen Kupplungseinrichtung für eine Drehrichtungsumkehr der Ausgangswelle sorgt, was eine Rückwärtsfahrt des das Schaltgetriebe tragenden Fahrzeuges ermöglicht.

Während bei Schaltgetrieben mit jeweils achsparallel angeordneten und damit über rein zylinderförmig ausgebildete Zahnräder verfügende Zahnradpaare eine Axiallagerung des Zwischenrades aufgrund sich kompensierenden Axialkräfte überflüssig wird, treten bei zueinander geneigt liegenden Anordnungsachsen und je nach geometrischer Ausgestaltung und Positionierung des Zwischenrades relativ zu den beiden Gegenrädern zusätzliche Axialkraftanteile auf, die eine zusätzliche axiale Lagerung des Zwischenrades nötig machen. Folglich wird hierdurch der Herstellungsaufwand des Schaltgetriebes erhöht.

Es ist daher die Aufgabe der vorliegenden Erfindung, ein Schaltgetriebe zur Verfügung zu stellen, bei welchem Anordnungsachsen schaltbarer Zahnradpaare unter einem Winkel zueinander positioniert liegen und eine Drehrichtungsumkehr mittels eines abseits der Anordnungsachse vorgesehenen und axialkraftfreien Zwischenrades einleitbar ist.

Diese Aufgabe wird ausgehend vom Oberbegriff des Anspruchs 1 in Verbindung mit dessen kennzeichnenden Merkmalen gelöst. Die darauffolgenden, abhängigen Ansprüche geben jeweils vorteilhafte Weiterbildungen der Erfindung wieder.

Die Erfindung umfasst die technische Lehre, dass das Zwischenrad zylinderförmig ausgebildet und derart relativ zu den Gegenrädern angeordnet ist, dass eine Rotationsachse des Zwischenrades parallel zu Berührlinien mit den Gegenrädern verläuft. Durch die zylinderförmige Ausführung des Zwischenrades sowie die parallel zur Rotationsachse verlaufenden Berührlinien mit den Gegenrädern werden keine zusätzlichen Axialkraftanteile des Zwischenrades erzeugt, während sich rein aus Schrägverzahnungen ergebende Axialkräfte einander kompensieren, da der treibende und der getriebene Eingriff, wie auch bei zylindrischen Rädern, entgegengesetzte Kraftrichtungen zur Folge hat. Folglich kann durch eine derartige Ausgestaltung auch bei unter einem Winkel zueinander positionierten Anordnungsachsen ein axialkraftfreies Zwischenrad realisiert werden und dementsprechend eine zusätzliche Axiallagerung an dieser Stelle entfallen. Die Rotationsachsen des Zwischenrades und der Gegenräder schneiden sich dabei in einem Punkt.

Entsprechend der Erfindung sind beide Gegenräder kegelförmig ausgebildet. Dadurch können die Axialkraftkomponenten des einzelnen Gegenrades entsprechend des jeweils gewählten Kegelwinkels beeinflusst werden, wodurch eine gleichmäßigere Aufteilung auf beide Gegenräder möglich wird. Zudem können auch größere Neigungswinkel zwischen den Anordnungsachsen dargestellt werden.

In Weiterbildung der Erfindung sind das Zwischenrad und die Gegenräder in einer gemeinsamen Ebene liegend angeordnet. Dadurch kann eine, in axialer Richtung kompaktbauende Anordnung zum Einleiten einer Drehrichtungsumkehr der Ausgangswelle realisiert werden.

Gemäß einer alternativen Ausführungsform der Erfindung liegen der Eingriff des Zwischenrades mit dem einen Gegenrad und der Eingriff des Zwischenrades mit dem anderen Gegenrad in zueinander versetzten Ebenen. Dies hat den Vorteil, dass der Platzbedarf in radialer Richtung in beiden Ebenen jeweils kleiner gehalten werden kann.

In Weiterbildung der Erfindung ist das antriebsseitig oder das abtriebsseitig platzierte Gegenrad zugleich ein Zahnrad eines der schaltbaren Zahnradpaare. Durch diese Maßnahme kann der Fertigungsaufwand des erfindungsgemäßen Schaltgetriebes weiter reduziert werden.

Entsprechend einer weiteren, vorteilhaften Ausführungsform der Erfindung ist zwischen Eingangs- und Ausgangswelle eine Vorgelegewelle platziert, die mit der Eingangswelle über eine feste Zahnradstufe und mit der Ausgangswelle über die schaltbaren Zahnradpaare in Wirkverbindung steht. Vorteilhafterweise sind hierbei zudem die Eingangs- und Ausgangswelle koaxial zueinander angeordnet. Dadurch eignet sich das erfindungsgemäße Schaltgetriebe insbesondere für heckgetriebene und allradgetriebene Kraftfahrzeuge.

Es ist eine weitere Ausführungsform der Erfindung, dass die Kupplungseinrichtung der Anordnung zum Einleiten einer Drehrichtungsumkehr der Ausgangswelle nach Art einer Synchronisation ausgebildet ist. Dadurch kann einem erhöhten Verschleiß oder gar Ausfall durch einen Abbau eventuell noch bestehender Drehzahlunterschiede zwischen dem jeweiligen Gegenrad und der dieses tragenden Welle vorgebeugt werden.

Weitere, die Erfindung verbessernde Maßnahmen werden nachstehend gemeinsam mit der Beschreibung bevorzugter Ausführungsformen der Erfindung anhand der Figuren näher dargestellt.

Es zeigt:
Fig. 1 eine perspektivische Ansicht des erfindungsgemäßen Schaltgetriebes im Bereich eines Zwischenrades gemäß einer ersten Ausführungsform;
Fig. 2A und 2B schematische Prinzipskizzen des Zusammenwirkens des Zwischenrades mit zwei Gegenrädern des erfindungsgemäßen Schaltgetriebes; und
Fig. 3 eine perspektivische Ansicht des erfindungsgemäßen Schaltgetriebes im Bereich eines Zwischenrades gemäß einer zweiten Ausführungsform.

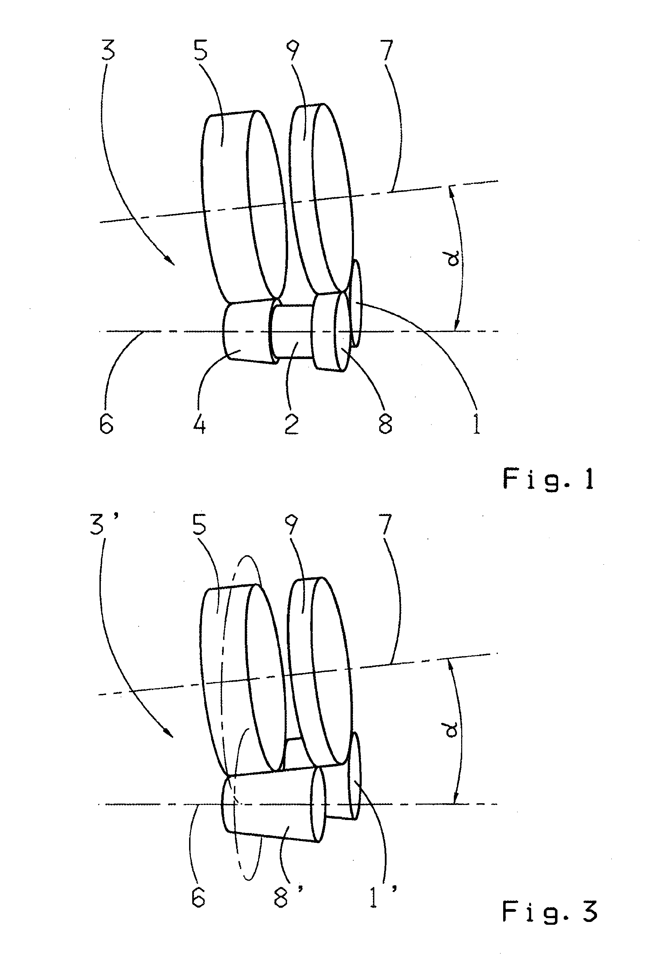

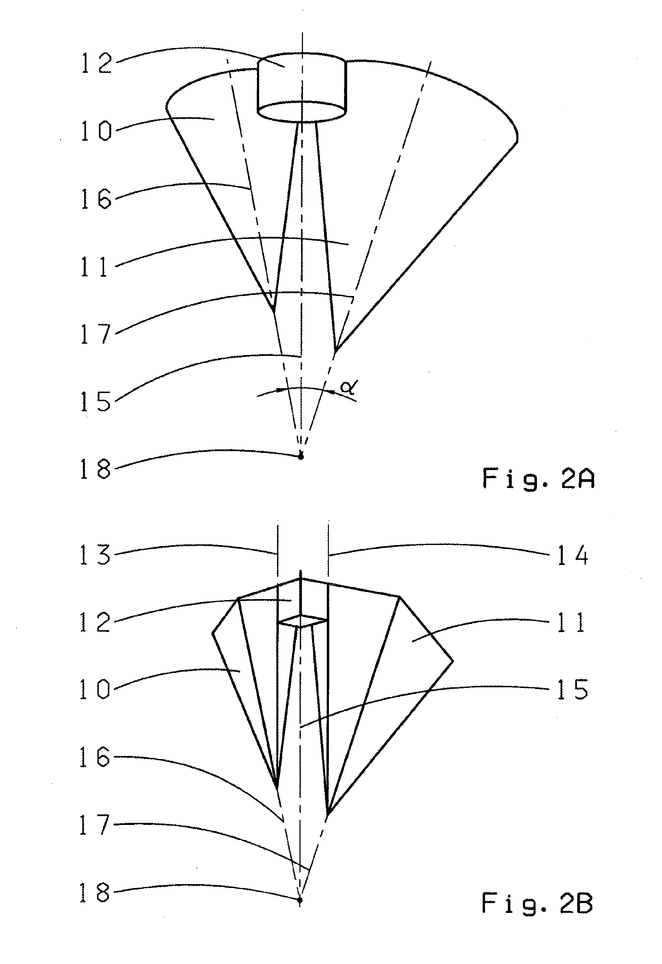

In Fig. 1 ist eine perspektivische Ansicht des erfindungsgemäßen Schaltgetriebes gemäß einer ersten Ausführungsform im Bereich eines Zwischenrades 1 dargestellt. Das Schaltgetriebe verfügt in diesem Bereich über eine - hier nicht dargestellte - Ausgangswelle, sowie eine nur teilweise zu sehende Vorgelegewelle 2, die über ein schaltbares Zahnradpaar 3 mit der Ausgangswelle gekoppelt werden kann. Dem Fachmann wird hierbei klar sein, dass zwischen der Ausgangswelle und der Vorgelegewelle 2 eine, der Anzahl an darzustellenden Übersetzungsverhältnissen entsprechende Menge an Zahnradstufen vorgesehen sein muss, wobei jedes einzelne Zahnradpaar durch entweder auf Seiten der Ausgangswelle oder auf Seiten der Vorgelegewelle 2 angeordnete Kupplungselemente gezielt geschaltet werden kann und als Folge dessen das entsprechende Übersetzungsverhältnis wirksam wird. Es wird des Weiteren klar sein, dass die Vorgelegewelle 2 je nach Bauart des Schaltgetriebes entweder über eine feste Zahnradstufe mit einer Eingangswelle des Schaltgetriebes in Wirkverbindung steht oder direkt durch die Eingangswelle gebildet ist. In Fig. 1 verfügt das schaltbare Zahnradpaar 3 über ein antriebsseitig platziertes Zahnrad 4 und ein abtriebsseitig vorgesehenes Zahnrad 5, welche permanent miteinander in Eingriff stehen und auf jeweils zugehörigen Anordnungsachsen 6 und 7 positioniert sind, wobei diese Anordnungsachsen 6 und 7 jeweils den Rotationsachsen von Ausgangswelle und Vorgelegewelle 2 entsprechen. Ferner sind die beiden Anordnungsachsen 6 und 7 unter einem Winkel α zueinander liegend angeordnet, wobei Zahnrad 4 und Zahnrad 5 jeweils eine kegelförmige Gestalt aufweisen, um eine Übertragung der Leistung von der Vorgelegewelle 2 auf die Ausgangswelle trotz der Winkelstellung zu ermöglichen. Zum Realisieren einer Rückwärtsfahrt des das Schaltgetriebe aufweisenden Fahrzeuges und der hierzu nötigen Drehrichtungsumkehr der Ausgangswelle, sind des Weiteren auf den Anordnungsachsen 6 und 7 Gegenräder 8 und 9 platziert, die über das Zwischenrad 1 miteinander in Wirkverbindung stehen. Die Drehrichtungsumkehr der Ausgangswelle wird hierbei dadurch erreicht, dass die Leistung ausgehend von der Vorgelegewelle 2 über das Gegenrad 8 auf das Zwischenrad 1 und von diesem auf das auf der Ausgangswelle platzierte Gegenrad 9 übertragen wird. Während die Gegenräder 8 und 9 wiederum kegelförmig ausgeführt sind, ist das Zwischenrad 1 als zylindrisches Zahnrad ausgebildet, wobei dieses derart relativ zu den beiden Gegenrädern 8 und 9 positioniert ist, dass keine axialen Kraftanteile im Zwischenrad 1 erzeugt werden und somit eine Axiallagerung an dieser Stelle überflüssig wird. Zum besseren Verständnis ist das Zusammenwirken des Zwischenrades 1 mit den Gegenrädern 8 und 9 in den Fig. 2A und 2B dargestellt. In diesen Darstellungen werden die Gegenräder 8 und 9 durch die Ersatzwälzkörper 10 und 11 in Form von Kegeln und das Zwischenrad 1 durch den Ersatzwälzkörper 12 in Form eines Zylinders repräsentiert. Wie insbesondere aus der Schnittdarstellung in Fig. 2B ersichtlich ist, ist der Ersatzwälzkörper 12 des Zwischenrades 1 bezüglich der Ersatzwälzkörper 10 und 11 der Gegenräder 8 und 9 derart angeordnet, dass Berührlinien 13 und 14 zwischen den Körpern parallel zu einer Rotationsachse 15 des Ersatzwälzkörpers 12 des Zwischenrades 1 verlaufen. Auf diese Art und Weise werden folglich keine Axialkraftanteile in das Zwischenrad 1 durch die beiden Gegenräder 8 und 9 eingeleitet, wobei dem Fachmann klar sein wird, dass aufgrund von Schrägverzahnungen entstehende Axialkräfte, äquivalent zu achsparallelen Stirnradstufen, einander kompensieren. Die Rotationsachsen 16 und 17 der Ersatzwälzkörper 10 und 11 der Gegenräder 8 und 9 schneiden sich mit der Rotationsachse 15 des Ersatzwälzkörpers 12 des Zwischenrades 1 in einem Schnittpunkt 18.

Aus Fig. 3 ist das erfindungsgemäße Schaltgetriebe gemäß einer zweiten Ausführungsform im Bereich eines Zwischenrades 1' ersichtlich. Im Unterschied zu der vorgenannten Ausführung ist hierbei ein Kontakt zwischen Gegenrad 8' und Zwischenrad 1' und zwischen Zwischenrad 1' und Gegenrad 9 nicht in einer Ebene liegend realisiert. Um dies zu ermöglichen, ist das Zwischenrad 1' in axialer Richtung entsprechend verlängert ausgebildet. Des Weiteren bildet das Gegenrad 8' zugleich das antriebsseitige Zahnrad des schaltbaren Zahnradpaares 3' aus und ist dementsprechend ebenfalls in axialer Richtung verlängert ausgeführt.

### Bezugszeichen

- 1, 1': Zwischenrad
- 2: Vorgelegewelle
- 3, 3': schaltbares Zahnradpaar
- 4: antriebsseitiges Zahnrad
- 5: abtriebsseitiges Zahnrad
- 6: antriebsseitiges Anordnungsachse
- 7: abtriebsseitiges Anordnungsachse
- 8, 8': antriebsseitiges Gegenrad
- 9: abtriebsseitiges Gegenrad
- 10: Ersatzwälzkörper Gegenrad
- 11: Ersatzwälzkörper Gegenrad
- 12: Ersatzwälzkörper Zwischenrad
- 13: Berührlinie
- 14: Berührlinie
- 15: Rotationsachse Zwischenrad
- 16: Rotationsachse Gegenrad
- 17: Rotationsachse Gegenrad
- 18: Schnittpunkt

- α: Winkel

## Patentansprüche

1. Schaltgetriebe mit einer Eingangswelle, deren Drehzahl und deren Drehmoment auf eine Ausgangswelle durch Wahl eines von mehreren, schaltbaren Zahnradpaaren (3; 3') übersetzt übertragbar ist, welche durch an- und abtriebsseitig jeweils auf gemeinsamen Anordnungsachsen (6, 7) platzierte Zahnräder (4, 5; 8', 5) gebildet sind, wobei diese Anordnungsachsen (6, 7) unter einem Winkel (α) zueinander positioniert liegen und die Zahnradpaare (3; 3') hierzu jeweils mindestens ein kegelförmig ausgeführtes Zahnrad (4, 5; 8', 5) aufweisen, und wobei eine Drehrichtungsumkehr der Ausgangswelle über ein abseits der Anordnungsachsen (6, 7) liegendes und mit einem antriebs- und einem abtriebsseitig platzierten Gegenrad (8, 9; 8', 9) in Eingriff stehendes Zwischenrad (1; 1') durch Betätigen einer Kupplungseinrichtung einleitbar ist, wobei zumindest eines der Gegenräder (8, 9; 8', 9) kegelförmig ausgeführt Ist, **dadurch gekennzeichnet, dass** das Zwischenrad (1; 1') zylinderförmig ausgebildet und derart relativ zu den Gegenrädern (8, 9; 8', 9) angeordnet ist, dass eine Rotationsachse (15) des Zwischenrades (1; 1') parallel zu Berührlinien (13, 14) mit den Gegenrädern (8, 9; 8', 9) verläuft, wobei sich die Rotationsachse (15) des Zwischenrades (1; 1') und die Rotationsachsen (16, 17) der Gegenräder (8, 9; 8', 9) in einem gemeinsamen Schnittpunkt (18) schneiden und beide Gegenräder (8, 9; 8', 9) kegelförmig ausgebildet sind.

2. Schaltgetriebe nach Anspruch 1, **dadurch gekennzeichnet, dass** das Zwischenrad (1) und die Gegenräder (8, 9) in einer gemeinsamen Ebene liegend angeordnet sind.

3. Schaltgetriebe nach Anspruch 1, **dadurch gekennzeichnet, dass** der Eingriff des Zwischenrades (1') mit dem antriebsseitigen Gegenrad (8') und der Eingriff des Zwischenrades (1') mit dem abtriebsseitigen Gegenrad (9) in zueinander versetzten Ebenen liegen.

4. Schaltgetriebe nach einem der vorhergehenden Ansprüche, **dadurch gekennzeichnet, dass** das antriebsseitig oder das abtriebsseitig platzierte Gegenrad (8') zugleich ein Zahnrad eines der schaltbaren Zahnradpaare (3') ist.

5. Schaltgetriebe nach einem der vorhergehenden Ansprüche, **dadurch gekennzeichnet, dass** zwischen Eingangs- und Ausgangswelle eine Vorgelegewelle (2) platziert ist, die mit der Eingangswelle über eine feste Zahnradstufe und mit der Ausgangswelle über die schaltbaren Zahnradpaare (3) in Wirkverbindung steht.

6. Schaltgetriebe nach Anspruch 5, **dadurch gekennzeichnet, dass** die Eingangs- und die Ausgangswelle koaxial zueinander angeordnet sind.

7. Schaltgetriebe nach einem der vorhergehenden Ansprüche, **dadurch gekennzeichnet, dass** die Kupplungseinrichtung nach Art einer Synchronisation ausgebildet ist.

## Claims

1. Transmission, with an input shaft, of which the rotational speed and the torque can be transferred, stepped up, to an output shaft by the selection of one of a plurality of shiftable pairs of gearwheels (3; 3') which are formed by gearwheels (4, 5; 8', 5) placed on common arrangement axes (6, 7) in each case on the drive side and on the driven side, these arrangement axes (6, 7) lying, positioned at an angle (α) to one another, and, for this purpose, the pairs of gearwheels (3; 3') having in each case at least one conically formed gearwheel (4, 5; 8', 5), and a reversal in direction of rotation of the output shaft being initiatable, by the actuation of a clutch device, via an intermediate wheel (1; 1') which lies on the far side of the arrangement axes (6, 7) and is in engagement with a mating wheel (8, 9; 8', 9) placed in each case on the drive side and on the driven side, at least one of the mating wheels (8, 9; 8', 9) being of conical form, **characterized in that** the intermediate wheel (1; 1') is designed cylindrically and is arranged in relation to the mating wheels (8, 9; 8' , 9) in such a way that an axis of rotation (15) of the intermediate wheel (1; 1') runs parallel to lines of contact (13, 14) with the mating wheels (8, 9; 8', 9), the axis of rotation (15) of the intermediate wheel (1; 1') and the axes of rotation (16, 17) of the mating wheels (8, 9; 8', 9) intersecting at a common intersection point (18), and the two mating wheels (8, 9; 8', 9) being designed conically.

2. Transmission according to Claim 1, **characterized in that** the intermediate wheel (1) and the mating wheels (8, 9) are arranged so as to lie in a common plane.

3. Transmission according to Claim 1, **characterized in that** the engagement of the intermediate wheel (1') with the drive-side mating wheel (8') and the engagement of the intermediate wheel (1') with the driven-side mating wheel (9) lie in planes offset to one another.

4. Transmission according to one of the preceding claims, **characterized in that** the mating wheel (8') placed on the drive side or that placed on the driven side is at the same time a gearwheel of one of the shiftable pairs of gearwheels (3').

5. Transmission according to one of the preceding claims, **characterized in that** between the input and the output shaft is placed a countershaft (2) which is operatively connected to the input shaft via a fixed gearwheel stage and to the output shaft via the shiftable pairs of gearwheels (3).

6. Transmission according to Claim 5, **characterized in that** the input and the output shaft are arranged coaxially to one another.

7. Transmission according to one of the preceding claims, **characterized in that** the clutch device is designed to be of the synchronizing type.

## Revendications

1. Boîte de vitesses comprenant un arbre d'entrée dont la vitesse de rotation et dont le couple peuvent être transmis de manière démultipliée à un arbre de sortie en sélectionnant l'une parmi plusieurs paires de roues dentées commutables (3 ; 3'), lesquelles sont formées par des roues dentées (4, 5 ; 8', 5) placées respectivement du côté de l'entraînement et du côté de la sortie sur des axes d'agencement communs (6, 7), ces axes d'agencement (6, 7) se situant de manière positionnée suivant un angle (α) l'un par rapport à l'autre et les paires de roues dentées (3 ; 3') comprenant à cet effet respectivement au moins une roue dentée (4, 5 ; 8', 5) réalisée sous forme conique, et une inversion du sens de rotation de l'arbre de sortie pouvant être réalisée par le biais d'une roue intermédiaire (1 ; 1') se trouvant à l'écart des axes d'agencement (6, 7) et s'engrenant avec une roue conjuguée placée du côté de l'entraînement et une roue conjuguée placée du côté de la sortie (8, 9 ; 8' , 9), par actionnement d'un dispositif d'embrayage, au moins l'une des roues conjuguées (8, 9 ; 8', 9) étant réalisée sous forme conique, **caractérisée en ce que** la roue intermédiaire (1 ; 1') est réalisée sous forme cylindrique et est disposée par rapport aux roues conjuguées (8, 9 ; 8', 9) de telle sorte qu'un axe de rotation (15) de la roue intermédiaire (1 ; 1') s'étende parallèlement aux lignes de contact (13, 14) avec les roues conjuguées (8, 9 ; 8', 9), l'axe de rotation (15) de la roue intermédiaire (1 ; 1') et les axes de rotation (16, 17) des roues conjuguées (8, 9 ; 8', 9) se coupant en un point d'intersection commun (18) et les deux roues conjuguées (8, 9 ; 8', 9) étant réalisées sous forme conique.

2. Boîte de vitesses selon la revendication 1, **caractérisée en ce que** la roue intermédiaire (1) et les roues conjuguées (8, 9) sont disposées dans un plan commun.

3. Boîte de vitesses selon la revendication 1, **caractérisée en ce que** l'engrènement de la roue intermédiaire (1') avec la roue conjuguée côté entraînement (8') et l'engrènement de la roue intermédiaire (1') avec la roue conjuguée côté sortie (9) se situent dans des plans décalés l'un par rapport à l'autre.

4. Boîte de vitesses selon l'une quelconque des revendications précédentes, **caractérisée en ce que** la roue conjuguée placée côté entraînement ou la roue conjuguée placée côté sortie (8') est en même temps une roue dentée de l'une des paires de roues dentées commutables (3').

5. Boîte de vitesses selon l'une quelconque des revendications précédentes, **caractérisée en ce qu'**un arbre intermédiaire (2) est placé entre l'arbre d'entrée et l'arbre de sortie, lequel arbre intermédiaire est en liaison fonctionnelle avec l'arbre d'entrée par le biais d'un étage à roues dentées fixe et est en liaison fonctionnelle avec l'arbre de sortie par le biais des paires de roues dentées commutables (3).

6. Boîte de vitesses selon la revendication 5, **caractérisée en ce que** l'arbre d'entrée et l'arbre de sortie sont disposés coaxialement l'un par rapport à l'autre.

7. Boîte de vitesses selon l'une quelconque des revendications précédentes, **caractérisée en ce que** le dispositif d'embrayage est réalisé à la manière d'une synchronisation.
